## Europäisches Patentamt

## European Patent Office

## Office européen des brevets

(19)

(11) Veröffentlichungsnummer: **0 048 865**
**B1**

(12)
# EUROPÄISCHE PATENTSCHRIFT

(45) Veröffentlichungstag der Patentschrift:
27.12.84

(51) Int. Cl.³: **H 04 B 7/26,** H 04 L 25/38,
H 04 L 1/20

(21) Anmeldenummer: **81107157.0**

(22) Anmeldetag: **10.09.81**

(54) Verfahren zur Erkennung von Digitalinformation bei einer digitalen Informationsübertragung, insbesondere Informationsübertragung in Mobilfunk-Kommunikationssystemen.

(30) Priorität: **29.09.80 DE 3036614**

(43) Veröffentlichungstag der Anmeldung:
**07.04.82 Patentblatt 82/14**

(45) Bekanntmachung des Hinweises auf die Patenterteilung:
**27.12.84 Patentblatt 84/52**

(84) Benannte Vertragsstaaten:
**BE FR GB IT NL SE**

(56) Entgegenhaltungen:
**DE - A - 1 804 719**
**FR - A - 2 017 594**
**US - A - 2 398 490**
**US - A - 3 217 258**
**US - A - 3 366 930**
**US - A - 3 480 910**

(73) Patentinhaber: **Siemens Aktiengesellschaft, Berlin und München Wittelsbacherplatz 2, D-8000 München 2 (DE)**

(72) Erfinder: **Das Gupta, Probodh, Lohengrinstrasse 32, D-8034 Germering (DE)**

ACTORUM AG

## Beschreibung

Die vorliegende Erfindung betrifft ein Verfahren zur Erkennung von Digitalinformation bei einer digitalen Informationsübertragung, insbesondere Informationsübertragung in Mobilfunk-Kommunikationssystemen, und eine Schaltungsanordnung zur Durchführung des Verfahrens.

Sprache, Daten und Bild sind die Informationsformen, die in bekannten, drahtgebundenen Kommunikationssystemen und in zukünftigen Mobilfunk-Kommunikationssystemen zu übertragen sind. Bei einer Übertragung von Information, insbesondere digitalisierter Information in einem Mobilfunk-Kommunikationssystem, besteht ein Problem darin, dass durch sog. Mehrwegausbreitung auf dem Funkweg das bekannte Fading entsteht, das während eines Übertragungsvorgangs Bitfehler verursachen kann.

Es sind Verfahren bekannt, mittels derer auf der jeweiligen Empfängerseite aus der dort zur Verfügung stehenden Digitalinformation ein Abtastimpuls abgeleitet wird und dieser Abtastpuls dazu verwendet wird, einen Abtastzeitpunkt in den jeweiligen Bereich eines Informationselementes zu legen, in dem der abzutastende, dieses Informationselement repräsentierende Impuls seinen vermutbaren quasistationären Zustand einnimmt, vgl. beispielsweise DE–B– 1 804 719. Diese bekannten Verfahren haben jedoch den Nachteil, dass in solchen Fällen, in denen Informationselemente repräsentierende Impulse durch Störeinflüsse in der Amplitude und/oder in der Phase verzerrt werden, gerade zu dem Entscheidungszeitpunkt einen Bitfehler vortäuschen können, obwohl der betreffende Impuls insgesamt betrachtet fehlerfrei sein kann.

In den bisher konzipierten Mobilfunk-Kommunikationssystemen wird eine möglichst günstige Bitfehlerrate durch Anwendung unterschiedlicher Codierungsverfahren, beispielsweise «Forward Error Correcting», angestrebt. Diese Philosophie steht jedoch dem Bestreben entgegen, eine Vereinheitlichung der Betriebsweisen zu erreichen.

Aus der US–A–3 366 930 ist ein Verfahren zur Erkennung von Digitalinformationen bei einer digitalen Informationsübertragung bekannt, bei dem mehrere Abtastpulse aus der empfangsseitig zur Verfügung stehenden Digitalinformation mit vorzugsweise einem ganzzahligen Vielfachen der Informationstakt-Frequenz abgeleitet werden und bei dem die Abtastzeitpunkte in den jeweiligen Bereich eines Informationselementes gelegt sind, in dem der abzutastende, dieses Informationselement repräsentierende Impuls seinen vermutbaren quasi-stationären Zustand einnimmt. Bei diesem bekannten Verfahren ist vorgesehen, dass die Flanken der Abtastpulse an entsprechend vielen Abtastzeitpunkten innerhalb eines weiter gespannten Zeitbereiches des das Informationselement repräsentierenden Impulses gelegt sind, dass jeweils ein Vergleich eines ersten Abtastergebnisses mit einem oder mehreren folgenden Abtastergebnissen durchgeführt wird und dass eine Mehrheitsentscheidung aufgrund der vorliegenden Abtastergebnisse getroffen wird.

Dieses bekannte Verfahren bietet keine Möglichkeit, einen aus mehreren möglichen Abtastmodi zur Erlangung einer erreichbaren kleinsten Fehlerbitrate anzuwenden.

Der vorliegenden Erfindung liegt die Aufgabe zugrunde, ein Verfahren zur Erkennung von Digitalinformation bei einer digitalen Informationsübertragung der genannten Art zu schaffen, mittels dessen günstige Fehlerbitraten erzielt werden können, ohne einen der zuvor genannten Nachteile in Kauf nehmen zu müssen.

Die der Erfindung zugrundeliegende Aufgabe wird durch ein Verfahren zur Erkennung von Digitalinformation bei einer digitalen Informationsübertragung, insbesondere Informationsübertragung in Mobilfunkkommunikationssystemen, bei dem mehrere Abtastimpulse aus der empfangsseitig zur Verfügung stehenden Digitalinformation mit vorzugsweise einem ganzzahligen Vielfachen der Informationstaktfrequenz abgeleitet werden und bei dem die Abtastzeitpunkte in den jeweiligen Bereich eines Informationselementes gelegt sind, in dem der abzutastende, dieses Informationselement repräsentierende Impuls seinen vermutbaren quasistationären Zustand einnimmt, wobei zumindest ein weiterer Abtastpuls aus der empfangsseitig zur Verfügung stehenden Digitalinformation abgeleitet wird, der ein weiteres ganzzahliges Vielfaches der Informationstaktfrequenz aufweist, wobei weitere Flanken des Abtastpulses an entsprechend vielen Abtastzeitpunkten innerhalb eines weitergespannten Abtastbereiches des das Informationselement repräsentierenden Impulses gelegt sind und wobei jeweils ein Vergleich eines ersten Abtastergebnisses mit einem oder mehreren folgenden Abtastergebnissen für ein individuelles Informationselement durchgeführt wird, gelöst, das dadurch gekennzeichnet ist, dass verschiedene Abtastmodi verwendet werden, unter denen durch Vergleich der Abtastergebnisse für ein individuelles Informationselement derjenige Abtastmodus herausgesucht wird, der die kleinste erkannte Informationsbitfehlerrate aufweist.

Die vorliegende Erfindung bietet den Vorteil, dass auf einfache Weise eine Mehrfachabtastung der Informationselemente durchführbar ist und an sich insgesamt fehlerfreie, jedoch verzerrte Informationselemente repräsentierende Impulse als fehlerfrei akzeptiert werden können, so dass die Informationsübertragung einen höheren Nutzeffekt erfährt.

Vorteilhafte Weiterbildungen der Erfindung sind durch die in den Unteransprüchen angegebenen Merkmale gekennzeichnet.

Im folgenden wird die Erfindung anhand mehrerer, ein bevorzugtes Ausführungsbeispiel für die Erfindung betreffender Figuren im einzelnen erläutert.

Fig. 1 zeigt das Diagramm eines Informationsimpulses mit verschiedenen Abtastimpulsen.

Fig. 2 zeigt das Blockschaltbild eines bevorzugten Ausführungsbeispiels für eine Schaltungs-

anordnung zur Durchführung des erfindungsge-mässen Verfahrens.

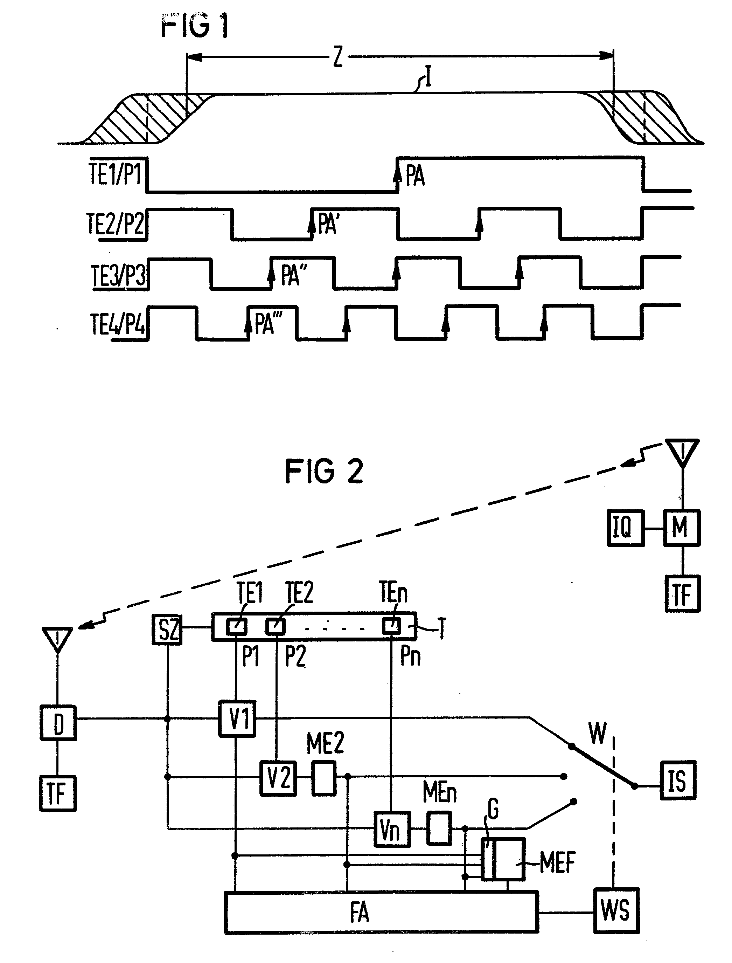

In der empfängerseitigen Schaltungsanordnung zur Durchführung des Verfahrens sind ein Demodulator D, ein Trägerfrequenzgenerator TF, verschiedene, nicht korrelierende Takterzeugungseinrichtungen TE1, TE2...TEn, mehrere Mehrheitsentscheidungsstufen ME2...MEn, eine Fehlerraten-Auswertungseinrichtung FA, eine Mehrheitsentscheidungsstufe zur Beurteilung der mittleren Fehlerrate MEF, eine Wählvorrichtung W, eine Wählvorrichtungssteuerung WS, eine Einrichtung zur Erzeugung eines Stellkriteriums für eine Zeitbereichseinstellung SZ sowie die Informationssenke IS vorgesehen. Senderseitig sind an sich bekannte, nur zum Verständnis der Zusammenhänge gezeigte Einrichtungen, wie eine Informationsquelle IQ, ein Trägerfrequenzgenera-tor TF und ein Modulator M dargestellt, vgl. Figur 2.

Zum optimalen Abtasten eines ein Informationselement repräsentierenden Impulses, vgl. Fig. 1, ist erfindungsgemäss vorgesehen, dass ausser dem aus der eintreffenden Digital-Information abgeleiteten Abtastpuls, der in einer ersten Takterzeugungseinrichtung TE1 erzeugt wird, weitere Abtastpulse mit jeweils einer höheren Frequenz im Vergleich zu der Frequenz der ersten Takterzeugungseinrichtung TE1 mittels weiterer Takterzeugungseinrichtungen TE2 ...TEn erzeugt werden. Mit den verschiedenen zur Verfü-gung gestellten Abtastpulsen können unter-schiedliche Abtastmodi für das Abtasten des das Informationselement repräsentierenden Impulses zur Anwendung kommen.

Aus Fig. 1 geht hervor, dass der das Informa-tionselement repräsentierende Impuls I in unter-schiedlich breiten Abtastbereichen mittels der unterschiedlichen Abtastpulse P1, P2...Pn zu un-terschiedlichen Abtastzeitpunkten PA, PA' abgeta-stet werden kann. Dafür wird jeweils ein Vergleich eines ersten Abtastergebnisses mit einem oder mehreren folgenden Abtastergebnissen für ein individuelles Informationselement durchgeführt. Aufgrund einer Mehrheitsentscheidung über die vorliegenden Abtastergebnisse wird jeweils derjenige Abtastmodus angewendet, der die kleinste erkannte Informationsbitfehlerrate aufweist.

Dazu sind an eine Abtasteinrichtung T, die die unterschiedlichen Takterzeugungseinrichtungen TE1, TE2...Ten enthält, jeweils jeder dieser Takt-erzeugungseinrichtungen zugeordnete individu-elle Vergleicher V1, V2...Vn angeschlossen. Mit Hilfe dieser Vergleicher werden die Abtastergebnisse, die sich aus einer jeweiligen Mehrfachabta-stung eines einzigen individuellen Informations-elements ergeben, miteinander verglichen. An die Vergleicher V2...Vn sind jeweils individuelle Mehrheitsentscheidungsstufen ME2...MEn angeschlossen, die jeweils in an sich bekannter Weise, beispielsweise mittels einer sog. Majoritätslogik, dasjenige Abtastergebnis als das «richtige» Abtastergebnis auswählen, das überwiegend in der Vielzahl der einzelnen Abtastergebnisse für ein einziges Informationselement aufgetreten ist.

Für den Fall, dass keine Mehrheitsentscheidung getroffen werden kann, wird der Signalausgang der betreffenden Mehrheitsentscheidungsstufe für den betreffenden Bewertungszeitraum beispielsweide durch eine Tristatelogik, unwirksam geschaltet.

Alle derart ermittelten endgültigen Abtastergebnisse aus den einzelnen Vergleichen V1, V2...Vn werden der Fehlerraten-Auswerteeinrichtung FA zugeführt. In ihr werden sie in an sich bekannter Weise miteinander verarbeitet bzw. aufbereitet. An die Signaleingänge dieser Fehler-raten-Auswerteeinrichtung FA sind Signalein-gänge der Mehrheitsentscheidungsstufe zur Be-urteilung einer mittleren Fehlerrate MEF über be-darfsweise wirksam geschaltete Gewichtungsstu-fen G angeschlossen. Mit dieser zuletzt genannten Einrichtung, die ebenfalls wieder eine sog. Majoritätslogik enthalten kann, wird ein Stellkriterium für die Wählersteuerung WS gewonnen, aufgrund dessen die Wählersteuerung WS die Wählvorrichtung W auf den Abtastmodus, nämlich den Abtastpuls, beispielsweise P2, einstellen kann, der die kleinste erkannte Informationsbitfehlerrate aufweist. An den Signalausgang dieser Wählvorrichtung W ist die Informationssenke IS den Informationsempfängers angeschlossen. Mittels einer Zeitbereichseinstellung SZ, die auf die Abtasteinrichtung T einwirken kann, kann der Zeitbereich Z, in dem die Abtastimpulsflanken in-nerhalb des das Informationselement repräsentie-renden Impulses liegen, durch eine Phasenregelung analog eingestellt werden. Dies kann entweder durch eine einmal vorzunehmende Einstellung oder durch eine ständig geregelte, durch die mittlere Fehlerrate beeinflusste Einstellung vorgenommen werden Die Stellgrösse für das Einstellen des Zeitbereiches kann ein Kriterium für die Auswahl des optimalen Abtastmodus dienen. Die Auswahl des optimalen Abtastmodus kann auch dadurch vorgenommen werden, dass ein analog einstellbarer Zeitbereich derart eingestellt wird, dass innerhalb dieses Zeitbereichs keine Flanke des das aktuelle Informationselement repräsentierenden Impulses auftritt, und dass die erforderliche Stellgrösse für das Einstellen des Zeitbereiches ein Kriterium für die Auswahl bildet.

Durch das erfindungsgemässe Verfahren und eine zum Durchführen dieses Verfahrens geeignete Schaltungsanordnung, für die die Schaltungsanordnung gemäss Fig. 2 ein bevorzugtes Ausführungsbeispiel darstellt, ist ein Verfahren zur Er-kennung von Digitalinformation geschaffen wor-den, das das Erkennen dieser Digitalinformation unempfindlicher gegenüber Störungen macht.

**Patentansprüche**

1. Verfahren zur Erkennung von Digitalinformation bei einer digitalen Informationsübertragung, insbesondere Informationsübertragung in Mobilfunk-Kommunikationssystemen, bei dem mehrere Abtastpulse aus der empfangsseitig zur Verfü-gung stehenden Digitalinformation mit vorzugs-weise einem ganzzahligen Vielfachen der Informationstaktfrequenz abgeleitet werden und bei dem die Abtastzeitpunkte in den jeweiligen Bereich eines Informationselementes gelegt sind, in dem der abzutastende, dieses Informationselement repräsentierende Impuls (I) seinen vermutbaren quasi-stationären Zustand einnimmt, wobei zumindest ein weiterer Abtastpuls (P2) aus der empfangsseitig zur Verfügung stehenden Digitalinformation abgeleitet wird, der ein weiteres ganzzahliges Vielfaches der Informationstaktfrequenz aufweist, wobei weitere Flanken des Abtastpulses (P2) an entsprechend vielen Abtastzeitpunkten (PA') innerhalb eines weiter gespannten Abtastbereiches des das Informationselement repräsentierenden Impulses (I) gelegt sind und jeweils ein Vergleich eines ersten Abtastergebnisses mit einem oder mehreren folgenden Abtastergebnissen für ein individuelles Informationselement durchgeführt nird, dadurch gekennzeichnet, dass verschiedene Abtastmodi verwendet werden, unter denen durch Vergleich der Abtastergebnisse für ein individuelles Informationselement derjenige Abtastmodus herausgesucht wird, der die kleinste erkannte Informationsbitfehlerrate aufweist.

2. Verfahren nach Anspruch 1, dadurch gekennzeichnet, dass die Auswahl des optimalen Abtastmodus dadurch vorgenommen wird, dass ein analog einstellbarer Zeitbereich derart eingestellt wird, dass immerhalb dieses Zeitbereiches eine Flanke des das aktuelle Informationselement repräsentierenden Impulses (I) auftritt, und dass die erforderliche Stellgrösse für das Einstellen des Zeitbereiches ein Kriterium für die Auswahl bildet.

3. Verfahren nach Anspruch 1, dadurch gekennzeichnet, dass die Auswahl des optimalen Abtastmodus dadurch vorgenommen wird, dass ein analog einstellbarer Zeitbereich derart eingestellt wird, dass innerhalb dieses Zeitbereichs keine Flanke des das aktuelle Informationselement repräsentierenden Impulses Auftritt, und dass die erforderliche Stellgrösse für das Einstellen des Zeitbereiches ein Kriterium für die Auswahl bildet.

4. Schaltungsanordnung zur Durchführung des Verfahrens nach einem der vorhergehenden Ansprüche, dadurch gekennzeichnet, dass einem Demodulator (D), an den ein Trägerfrequenzgenerator (TF) angeschlossen ist, ein Antenneneingangssignal über einen Signaleingang zuführbar ist, dass an einen Signalausgang des Demodulators (D) Signaleingänge einer Vielzahl von Vergleichern (V1, V2...Vn) und ein Signaleingang einer Einrichtung zur Erzeugung eines Stellkriteriums für eine Zeitbereichseinstellung (SZ), die verschiedene Takterzeugungseinrichtungen (TE1, TE2...TEn) aktivieren kann, angeschlossen sind, dass jeweils an den Signalausgang des zweiten bis n-ten Vergleichers (V2...Vn) eine Mehrheitsentscheidungsstufe (ME2... bzw. MEn) mit ihrem Signaleingang angeschlossen ist, dass die Signalausgänge der Mehrheitsentscheidungsstufen (ME2...MEn) mit individuellen Signaleingängen einer Fehlerraten-Auswerteeinrichtung (FA) und mit individuellen Auswahlanschlüssen einer Wählvorrichtung (W) und mit Signaleingängen einer Mehrheitsentscheidungsstufe zur Beurteilung der mittleren Fehlerrate (MEF) verbunden sind, dass ein Signalausgang der Mehrheitsentscheidungsstufe zur Beurteilung der mittleren Fehlerrate (MEF) mit einem weiteren Signaleingang der Fehlerraten-Auswerteeinrichtung (FA) verbunden ist und dass ein Signalausgang der Fehlerraten-Auswerteeinrichtung (FA) an einen Signaleingang einer Wählvorrichtungssteuerung (WS) angeschlossen ist, deren Signalausgang ein Stellsignal für die Wählvorrichtung (W), mit der eine Informationssenke (IS) verbunden ist, liefert.

**Revendications**

1. Procédé pour la reconnaissance d'informations numériques lors d'une transmission numérique d'informations, notamment une transmission d'informations dans des systèmes de communication à postes mobiles, selon lequel on dérive plusieurs impulsions d'exploration à partir de l'information numérique disponible du côté réception et possédant de préférence une fréquence égale à un multiple entier de la fréquence d'horloge de l'information et selon lequel les instants d'exploration sont fixés dans la plage respective d'un élément d'information, dans laquelle l'impulsion (I) devant être explorée et représentant cet élément d'information prend son état quasi-stationnaire supposé, et selon lequel on dérive au moins une autre impulsion d'exploration (P2), qui possède une fréquence égale à un autre multiple entier de la fréquence d'horloge disponible du côté réception, et selon lequel d'autres flancs de l'impulsion d'exploration (P2) sont fixés en un nombre élevé correspondant d'instants d'exploration (PA') à l'intérieur d'une plage d'exploration, de portée plus étendue, de l'impulsion (I) représentant l'élément d'information, et une comparaison du premier résultat d'exploration à un ou plusieurs résultats d'exploration suivants est exécutée pour un élément d'information individuel, caractérisé par le fait qu'on utilise différents modes d'exploration parmi lesquels on recherche, par comparaison des résultats d'exploration pour un élément individuel de l'information, le mode d'exploration qui possède le plus faible taux identifié d'erreurs sur les bits d'information.

2. Procédé suivant la revendication 1, caractérisé par le fait qu'on réalise le choix du mode optimal d'exploration en réglant une plage temporelle réglable de façon analogique de manière qu'à l'intérieur de cette plage temporelle il apparaisse un flanc d'impulsion (I) représentant l'élément actuel d'information et que la grandeur de réglage nécessaire pour le réglage de la plage temporelle constitue un critère pour le choix.

3. Procédé suivant la revendication 1, caractérisé par le fait qu'on réalise le choix du mode optimal d'exploration en réglant une plage temporelle réglable de façon analogique, de manière qu'à l'intérieur de cette plage temporelle il n'apparaisse aucun flanc de l'impulsion représentant l'élément réel d'information et que la grandeur nécessaire pour le réglage de la plage temporelle forme un critère pour le choix.

4. Montage pour la mise en œuvre du procédé suivant l'une des revendications précédentes, caractérisé par le fait qu'un signal d'entrée d'antenne peut être envoyé par l'intermédiaire d'une entrée des signaux à un démodulateur (D), auquel est raccordé un générateur de fréquence porteuse (TF), que des entrées de signaux d'une multiplicité de comparateurs (V1, V2...Vn) et une entrée de signaux d'un dispositif servant à produire un critère de réglage pour le dispositif (SZ) de réglage de la plage temporelle, qui peut activer différents dispositifs de production de cadences (TE1, TE2;..TEn), sont raccordées à une sortie des signaux du démodulateur (D), qu'un étage de décision majoritaire (ME2...MEn) est raccordé par son entrée des signaux aux sorties des signaux respectives du second jusqu'au n-ème comparateurs (V2...Vn), que les sorties des signaux des étages de décisison majoritaire (ME2...MEn) sont reliées à des entrées individuelles de signaux d'un dispositif (FA) d'évaluation des taux d'erreurs et à des bornes individuelles de sélection d'un dispositif de sélection (W) et à des entrées de signaux d'un étage de décision majoritaire pour l'évaluation du taux d'erreurs moyen (MEF), qu'une sortie des signaux de l'étage de décision majoritaire est reliée, pour l'évaluation des taux d'erreur moyens (MEF), à une autre entrée des signaux du dispositif (FA) d'évaluation des taux d'erreurs et qu'une sortie des signaux de ce dispositif (FA) est raccordée à une entrée des signaux d'un dispositif (WS) de commande du dispositif de sélection, dont le signal de sortie fournit un signal de réglage pour le dispositif de sélection (W), auquel est relié un puits d'information.

**Claims**

1, A method for recognizing digital information in a digital information transmission, in particular information transmission in mobile radio communications systems, wherein a plurality of sampling pulses are derived from the digital information available at the receiving end, which sampling pulses preferably have an integral multiple of the information clock pulse frequency, and wherein it is provided that the sampling times occur in the respective region of an information element in which the pulse (I) to be sampled, which represents the information element, occupies its presumable quasi-stationary state, where at least one further sampling pulse (P2) which possesses a further integral multiple of the information clock pulse frequency is derived from the digital information available at the receiving end, where further flanks of the sampling pulse (P2) are connected a corresponding number of sampling times (PA') within a further spread sampling region of the pulse (I) which represents the information element and a comparison of a first sampling result with one or more following sampling results for an individual information element is carried out, characterised in that different sampling modes are used, among which the sampling mode which has the smallest recognized information bit error rate is selected by comparison of the sampling result for an individual information element.

2. A method as claimed in Claim 1, characterised in that the selection of the optimal sampling mode is effected in that an analogously adjustable time region is set in such manner that within this time region a flank of the pulse (I) which represents the actual information element occurs, and that the required setting magnitude for the setting of the time region forms a criterion for the selection

3. A method as claimed in Claim 1, characterised in that the selection of the optimal sampling mode is carried out in that an analogously adjustable time region es set in such manner that a flank of the pulse, which represents the actual information element does not occur within this time region, and that the required setting magnitude for the setting of the time region is a criterion for the selection.

4. A circuit arrangement for implementing the mehod as claimed in one of the preceding Claims, characterised in that an antenna input signal can be fed to a demodulator (D) by a signal input, to which demodulator a carrier frequency generator (TF) is connected, that a signal output of the demodulator (D) has connected a plurality of comparators (V1, V2...Vn) and a signal input of a device for producing a setting criterion for a time region setting (SZ) which can activate different clock pulse generating devices (TE1,TE2...TEn), that a majority decision stage (ME2...or MEn as the case may be) respectively has its dignal input connected to the signal output of the second to nth comparator (V2...Vn), that the signal outputs of the majority decision stages (ME2...MEn) are connected to individual signal inputs of an error rate evaluating device (FA) and to individual selection terminals of a selector device (W) and to signal inputs of a majority decision stage for judging the mean error rate (MEF), that a signal output of the majority decision stage for judging the mean error rate (MEF) is connected to a further signal input of the error rate evaluating device (FA), and that a signal output of the error rate evaluating device (FA) is connected to a signal input of a selector device control unit (WS) whose signal output supplies a setting signal for the selector device (W), to which an information sink (IS) is connected.

FIG 1

FIG 2